(19) Europäisches Patentamt
European Patent Office
Office européen des brevets

(11) EP 1 637 337 A1

(12) **EUROPEAN PATENT APPLICATION**
published in accordance with Art. 158(3) EPC

(43) Date of publication:
**22.03.2006 Bulletin 2006/12**

(21) Application number: **04746177.7**

(22) Date of filing: **21.06.2004**

(51) Int Cl.:
***B41M 5/28*** *(1990.01)* ***B41M 5/30*** *(1990.01)*
***B41M 5/34*** *(1990.01)* ***C09B 57/00*** *(1968.09)*

(86) International application number:
**PCT/JP2004/008708**

(87) International publication number:
**WO 2005/000597 (06.01.2005 Gazette 2005/01)**

(84) Designated Contracting States:
**DE ES FI FR GB**

(30) Priority: **25.06.2003 JP 2003180430**
**05.08.2003 JP 2003286513**

(71) Applicant: **Asahi Kasei Chemicals Corporation**
**Tokyo 100-8440 (JP)**

(72) Inventors:
- **TAKAHASHI, Hideaki**
**1120001 (JP)**
- **TSURUGAYA, Muneaki**
**2100863 (JP)**
- **MATSUDA, Takayuki**
**Kawasaki-shi Kanagawa 2120024 (JP)**

(74) Representative: **Weber, Thomas et al**
**Patentanwälte**
**von Kreisler-Selting-Werner,**
**Deichmannhaus am Dom**
**50667 Köln (DE)**

(54) **DEVELOPER FOR RECORDING MATERIALS**

(57) A developer which contains a triphenolic compound (B) being a triphenolic compound (A) of the general formula (1) satisfying the requirements: (a) an OH group is present at one or more of 4- and 4'-positions of the left and right aromatic rings and (b) at least one of the substituents adjacent to at least one OH group on the left or right aromatic rings is hydrogen and which exhibits high sensitivity and image stability of images and less fog in non-image areas; and color forming materials and thermal recording materials made by using the same.

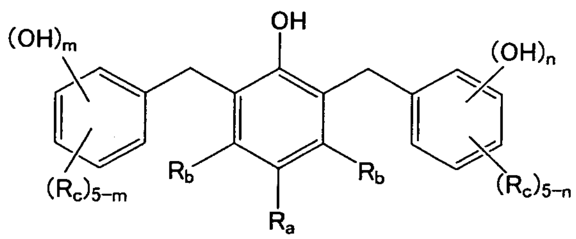

.... (1)

EP 1 637 337 A1

**Description**

TECHNICAL FIELD

The present invention relates to a developer for recording materials, a color forming material composition using the developer, and a recording material using the color forming material composition.

BACKGROUND ART

A large number of chemical color forming systems using the recording energy such as heat, pressure or the like have hitherto been known. Among such systems, there have long been known color forming systems usually each consisting of a two-component color forming system composed of a colorless or light-colored leuco dye and a developer forming color by contacting with the leuco dye, and such color forming systems have long been widely applied to recording materials. Examples of such recording materials include pressure-sensitive recording materials using pressure energy, thermal recording materials using thermal energy, photosensitive recording materials using photo energy, and others.

Among recording materials generally having been used as similarly to regular papers are pressure-sensitive recording materials using pressure energy. A pressure-sensitive recording material is generally obtained as follows: a leuco dye is dispersed in an appropriate medium to prepare an emulsion which contains the leuco dye particles of a few microns in size; thereafter a microcapsule material including these dye particles is prepared; this microcapsule material is applied onto a support to prepare a sheet of upper-layer paper, and a developer-containing developer layer is applied onto another support to prepare a sheet of lower-layer paper; and these sheets are superposed with each other in such a way that the microcapsule-coated surface and the developer-coated surface face each other. When writing pressure, hitting pressure or the like is applied onto the thus obtained pressure-sensitive recording material, the microcapsules are broken to release the leuco dye-containing inclusion of the microcapsules, so that the leuco dye transfers into the developer layer to contact with the developer and thus the leuco dye undergo chemical reaction with the developer for color forming to record an image.

In these years, a thermal recording method using thermal energy for recording has been highly used in a variety of information devices. Heat-sensitive recording materials for use in the thermal recording method have excellent properties in many aspects as recording materials, for example, in such a way that they are high in brightness, close to regular papers in appearance and in sense of touch, and high in color forming sensitivity. The thermal recording method is provided with advantages such that they are small in equipment size, need no equipment maintenance, and generate no noises. Consequently, the thermal recording method has been finding its expanding applications in a wide range of fields involving measurement recorders, facsimiles, printers, computer terminals, and automatic ticket machines for labels, tickets or the like.

The thermal recording method generally adopts a scheme in which a recording material prepared by arranging a color forming layer, mainly containing two heat-sensitive components, on a support is used, heat as recording energy is applied to this material by means of a thermal head, a hot stamp, a laser ray or the like so that the heat-sensitive components are made to contact with each other on the recording material, and thus recording by color formation is carried out. In many cases, as the heat-sensitive components, a color forming material such as a colorless or light-colored leuco dye and an acidic developer such as a phenolic compound are used in combination. Examples of the recording materials using these components may include, for example, a thermal recording paper which uses crystal violet lactone as the color forming material and 2,2-bis(4'-hydroxyphenyl)propane (bisphenol A: BPA) as the developer (see, for example, Patent Document 1).

An electron-donating compound and an electron-accepting compound are mainly used as the leuco dye and the developer for use in such a recording method, respectively. These compounds have excellent properties such that they each have an almost white appearance until they contact with each other, but by making them contact with each other, there can be obtained instantaneously various high-density color forming hues such as red, orange, yellow, green, blue and black. On the other hand, however, these compounds are poor in image stability of the color-formed images in such a way that the thus obtained color-formed images fade away with time, and are made to fade or fade away by a relatively short-term exposure to sunlight. Accordingly, these compounds are eagerly desired to be improved.

In these years, along with the diversification of recording devices, in particular, the downsizing and speed-up of devices, particularly demanded are the color forming capability (sensitivity) at low energy and the image stability of the recording quality. For the purpose of enhancing the color forming capability at low energy, usually the thermal response of the thermal recording material is improved; however, in general, when the thermal response of the thermal recording material is improved, there is raised a problem such that a phenomenon of fog in non-image areas, namely, color forming is caused even on the non-heated portion of a recoding medium. Several methods have hitherto been proposed for the purpose of improving the fog in non-image areas and the image stability of recorded images without impairing the thermal response. In particular, BPA is excellent in thermal response and fog in non-image areas and

inexpensive, and accordingly BPA has hitherto long and widely been used practically as a developer for use in general-purpose thermal papers for which the image stability of recorded images is not so seriously required. In these years, however, investigations of the replacement of BPA with other developers have been promoted from the viewpoint of the environmental safety issue because BPA is an endocrine disrupting substance.

On the other hand, techniques for using condensation polymers between phenolic compounds and aldehydes as developers have hitherto been investigated mainly for pressure-sensitive recording materials (see Patent Document 2). When developers of this type are used as thermal recording materials, there is a problem that the sensitivity is insufficient, although the image stability of recorded images is generally excellent. Accordingly, for the purpose of solving this problem, there has been made various investigations for enhancing the sensitivity by use of the above described condensation polymers in combination with phenolic compounds. For example, there has been disclosed a thermal recording method in which a condensation polymer between a phenolic compound and an aldehyde is used in combination with a monomeric phenol (see Patent Document 3). This thermal recording method uses as the developer the condensation polymer between a phenolic compound and an aldehyde in combination with a monomeric substituted phenolic compound, and the eutectic point of the developer is lower than any of the those of components, so that the thermal response is improved; however, the response thus improved is still insufficient from a practical viewpoint, and there is a problem that a further improvement of the sensitivity achieved by using another developer in combination results in generating the fog in non-image areas.

Alternatively, as a method for making the sensitivity higher by controlling the degree of condensation for the condensation polymer between a phenolic compound and an aldehyde, there has been disclosed a thermal sheet characterized by including as the developer(s) one or more of 2,2'-methylenediphenol compounds (diphenolic compounds) each obtained by condensation of a phenolic compound with an aldehyde in a ratio of 2 molecules of the former to 1 molecule of the latter (see Patent Document 4). However, even though the thermal response of this thermal sheet is relatively satisfactory, the image stability of recorded images is poor, and the fog in non-image areas still remains as a problem, so that this sheet still does not reach any practical level. On the other hand, for the purpose of improving the image stability of recorded images, there has been proposed a developer for a thermal recording material which is made of a composition including the above described diphenolic compound as the main component, and additionally, at least one of polyphenolic compounds such as triphenolic compounds to pentaphenolic compounds (see Patent Document 5). However, when the polyphenolic compounds are used to meet such a level as being able to make the image stability of recorded images satisfactory for practical use, the sensitivity is decreased to make it impossible to attain the sensitivity comparable with the sensitivity, obtained by use of BPA, which is demanded by the industrial field concerned.

There is also an attempt to use triphenolic compounds as developers (see Patent Document 6), but the triphenolic compounds used in this case each generally have a melting point as high as 200°C or higher, and provide to an insufficient extent the compatibility between the sensitivity comparable with that obtained with BPA and the image stability of recorded images, the compatibility being the problem to be solved by the present invention. Along this line, there is also an attempt to use two or more of such triphenolic compounds to be mixed together so that the eutectic point of the mixture thus obtained may be made as low as 150 to 200°C and the sensitivity is improved (see Patent Document 7). However, a composition containing such triphenolic compounds which are obtained by condensing p-substituted phenols at the ortho positions with respect to the OH groups provides no sufficient sensitivity and no sufficient image stability of recorded images, similarly to the case of the developer of Patent Document 6. There is proposed an alternative new triphenolic compound structure in which a p-substituted phenol is condensed, through the methylene groups at the ortho positions with respect to the OH group thereof, with other alkylphenols in such a way that each of these alkyl phenols is condensed at the para position with respect to the OH group thereof (see Patent Document 8); however, no sufficient sensitivity and no sufficient image stability of recorded images are obtained, similarly to the above described cases.

| | |
|---|---|
| Patent Document 1: | U.S. Patent No. 3539375 |
| Patent Document 2: | JP-B-42-20144 |
| Patent Document 3: | JP-A-48-58842 |
| Patent Document 4: | Japanese Patent No. 1712000 |
| Patent Document 5: | International Publication No. 02/098674 |
| Patent Document 6: | JP-A-06-115255 |
| Patent Document 7: | JP-A-2001-96926 |
| Patent Document 8: | JP-A-09-278695 |

## DISCLOSURE OF THE INVENTION

An object of the present invention to provide a developer that has a sensitivity comparable with that of BPA and being excellent in the image stability of recorded images, is low in fog in non-image areas and can be easily prepared; a color forming material composition including the developer; and an recording material using the color forming material

composition, in particular, a thermal recording material.

As a result of extensive studies for the purpose of solving the above described problem, the present inventors have found that the above described problem can be solved by use of a composition comprising a phenolic compound having a specific structure as a developer for recording materials. This finding has led to the completion of the present invention. More specifically, the present invention includes the following aspects (1) to (12).

(1) A developer comprising a triphenolic compound (B) which is a species of triphenolic compound (A) represented by the following general formula (1):

[Formula 1]

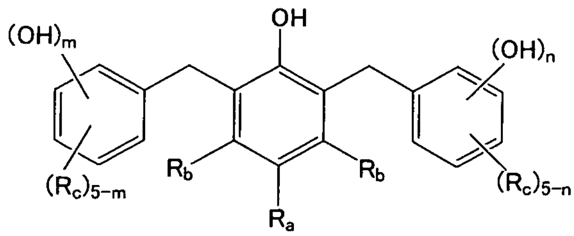

.... (1)

wherein $R_a$ is a group selected from the group consisting of an alkyl group having 1 to 18 carbon atoms, a cycloalkyl group having 5 to 10 carbon atoms, an alkoxy group having 1 to 4 carbon atoms, a halogen atom, and an aralkyl group and an aryl group each having 7 to 14 carbon atoms; $R_b$ is a group selected from the group consisting of a hydrogen atom, an alkyl group having 1 to 4 carbon atoms, an alkoxy group having 1 to 4 carbon atoms and a halogen atom, and the $R_b$ groups may be the same or different; $R_c$ is a group selected from the group consisting of a hydrogen atom, a halogen atom, a cyano group, an alkyl group having 1 to 18 carbon atoms, a cycloalkyl group having 5 to 10 carbon atoms, an alkoxy group having 1 to 4 carbon atoms, and an aralkyl group and an aryl group and each having 7 to 14 carbon atoms, and two or more $R_c$ groups, if any, may be the same or different; and m and n each represent an integer of 1 to 5,
wherein the triphenolic compound (B) has:

(a) an OH group at least at one of the 4- and 4'-positions respectively in the left and right aromatic rings; and
(b) a hydrogen atom as at least one of the substituents adjacent to at least one of the OH groups substituted in the left and right aromatic rings.

(2) The developer according to (1), wherein the content of a triphenolic compound (C) which is the triphenolic compound (A) and does not correspond to the triphenolic compound (B) is 30 wt% or less.
(3) The developer according to any one of (1) and (2), characterized in that the ratio of the content of the triphenolic compound (B) to the content of the triphenolic compound (A) is 0.5 or more.
(4) The developer according to any one of (1) to (3), wherein the content of the triphenolic compound (A) is 20 wt% or more.
(5) The developer according to any one of (1) to (4) which contains a condensation product obtained by condensing at least one of
a p-substituted phenol derivative represented by the following general formula (2):

[Formula 2]

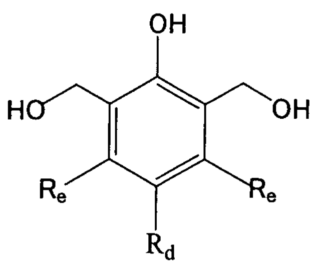

.... (2)

wherein $R_d$ is a group selected from the group consisting of an alkyl group having 1 to 18 carbon atoms, a cycloalkyl group having 5 to 10 carbon atoms, an alkoxy group having 1 to 4 carbon atoms, a halogen atom, and an aralkyl group and an aryl group each having 7 to 14 carbon atoms; and $R_e$ is a group selected from the group consisting of a hydrogen atom, an alkyl group having 1 to 4 carbon atoms, an alkoxy group having 1 to 4 carbon atoms and a halogen atom, and $R_e$ groups may be the same or different; and
a phenolic compound represented by the following general formula (3):

[Formula 3]

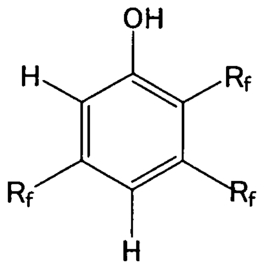

.... (3)

wherein $R_f$ is a group selected from the group consisting of a hydrogen atom, a hydroxyl group, a halogen atom, a cyano group, an alkyl group having 1 to 18 carbon atoms, a cycloalkyl group having 5 to 10 carbon atoms, an alkoxy group having 1 to 4 carbon atoms, and an aralkyl group and an aryl group each having 7 to 14 carbon atoms, and $R_f$ groups may be the same or different,
wherein the content of a condensation product component other than the triphenolic compound (A) contained in the condensation product is 50 wt% or less in relation to the total condensation product.

(6) The developer according to any one of (1) to (5), characterized in that each $R_c$ group in the formula (1) is a hydrogen atom.
(7) The developer according to any one of (1) to (6), characterized in that each $R_f$ group in the formula (3) is a hydrogen atom.
(8) The developer according to any one of (1) to (7), containing another developer capable of making a colorless or light-colored dye precursor form a color.
(9) A color forming material composition for recording materials containing a colorless or light-colored dye precursor and the developer according to any one of (1) to (8).
(10) The color forming material composition for recording materials according to (9), further comprising a sensitizer.
(11) A recording material formed by arranging on a support the color forming material composition for recording materials according to any one of (9) and (10).
(12) The recording material according to (11), wherein the recording material is a thermal recording material.

The developers of the present invention and the thermal recording materials using the developers make it possible to obtain thermal recording materials at low cost which are high in sensitivity and excellent in the image stability of images, and additionally low in fog in non-image areas, all these improved properties having hitherto been difficult to obtain.

BEST MODE FOR CARRYING OUT THE INVENTION

The developer of the present invention contains a triphenolic compound (B) which is a triphenolic compound (A) having a structure in which a p-substituted phenol nucleus is bonded, through the methylene groups at the ortho positions with respect to the OH group thereof, with other two phenol nuclei, as shown in the general formula (1), the triphenolic compound (B) being characterized by having an OH group at least at one of the 4- and 4'-positions respectively in the left and right aromatic rings, and a hydrogen atom as at least one of the substituents adjacent to at least one of the OH groups substituted in the left and right aromatic rings.
It is important that the triphenolic compound (B) of the present invention has one OH group at least at one of the 4- and 4'-positions respectively in the left and right aromatic rings. For example, when the triphenolic compound (B) has no OH group at the 4- and 4'-positions respectively in the left and right aromatic rings, but has OH groups only at the 2- and 2'-positions respectively in the left and right aromatic rings, because the central aromatic ring is present at

the ortho positions with respect to these OH groups through the methylene groups, the OH groups each playing the main role in color forming are sterically affected by the adjacently bonded groups, and consequently, the color forming sensitivity and the image stability of recorded images come to be insufficient.

It is also important that in the triphenolic compound (B) of the present invention, at least one of the substituents adjacent to at least one of the OH groups substituted in the left and right aromatic rings is a hydrogen atom. Here, "the substituents adjacent to the OH group" means the substituents or atoms respectively bonded to the two carbon atoms adjacent to a carbon atom to which an OH group is bonded in an aromatic ring. When all the substituents adjacent to the OH groups present in the left and right aromatic rings of the triphenolic compound (A) are groups other than hydrogen atoms, and the triphenolic compound (A) is used as a developer component in a color forming material composition, it is difficult to obtain a color forming material composition having a sufficient sensitivity and a sufficient image stability of recorded images because the interaction between the OH groups concerned and a leuco dye as the color forming component is hindered by the substituents adjacent to the OH groups concerned.

The triphenolic compound (B) of the present invention will be described more specifically.

In the general formula (1), $R_a$ is a group selected from the group consisting of an alkyl group having 1 to 18 carbon atoms, a cycloalkyl group having 5 to 10 carbon atoms, an alkoxy group having 1 to 4 carbon atoms, a halogen atom, and an aralkyl group and an aryl group each having 7 to 14 carbon atoms; $R_a$ is preferably an ethyl group, an n-propyl group, an isopropyl group, an n-butyl group, a sec-butyl group, a t-butyl group, a dodecyl group, a cyclohexyl group, a phenyl group, an $\alpha$-methylbenzyl group and an $\alpha,\alpha'$-dimethylbenzyl group, and more preferably an n-propyl group, an isopropyl group, an n-butyl group, a sec-butyl group, a t-butyl group, a cyclohexyl group, a phenyl group, an $\alpha$-methylbenzyl group or an $\alpha,\alpha'$-dimethylbenzyl group.

$R_b$ is a group selected from the group consisting of a hydrogen atom, an alkyl group having 1 to 4 carbon atoms, an alkoxy group having 1 to 4 carbon atoms and a halogen atom; among these preferred is a hydrogen atom or a methyl group, and the $R_b$ groups may be the same or different.

$R_c$ is a group selected from the group consisting of a hydrogen atom, a halogen atom, a cyano group, an alkyl group having 1 to 18 carbon atoms, a cycloalkyl group having 5 to 10 carbon atoms, an alkoxy group having 1 to 4 carbon atoms, and an aralkyl group and an aryl group each having 7 to 14 carbon atoms, and is preferably a hydrogen atom, a methyl group, an ethyl group, an n-propyl group, an isopropyl group, an n-butyl group, a sec-butyl group, a t-butyl group, a dodecyl group, a cyclohexyl group or a phenyl group; the $R_c$ groups may be the same or different, and particularly preferred is a case where all the $R_c$ groups are hydrogen atoms.

Here, m and n each are an integer of 1 to 5, and represent respectively the number of the OH groups substituted in the left aromatic ring and that in the right aromatic ring; in general, when the number of the OH groups is increased, the water solubility is increased to tend to cause a problem that the color formation occurs at the stage of preparing a color forming material composition by mixing the developer with a leuco dye in a water dispersion medium, or the fog in non-image areas occurs in the moisture resistance test, and consequently, m and n each are preferably 1 or 2.

In the developer of the present invention, the triphenolic compound (B) is an indispensable component; however, the developer concerned may include as a component other than the indispensable component a triphenolic compound (C) which is the triphenolic compound (A) but does not correspond to the triphenolic compound (B), for the purpose of decreasing the melting point of the developer and increasing the color forming sensitivity of the recording materials thereby obtained. If the content of the triphenolic compound (C) in the developer is high, sometimes disadvantageous effect are found in the color forming performance and the preservation performance of recorded images, and accordingly, the content of the triphenolic compound (C) is preferably 30 wt% or less, more preferably 25 wt% or less, and furthermore preferably 20 wt% or less. Preferred as the triphenolic compound (C) is, for example, a compound corresponding to an isomer of the triphenolic compound (B) in such a way that OH groups are found only at the 2- and 2'-positions in the left and right aromatic rings from the viewpoint of an efficient method for preparing a developer because, as will be described later, such a compound can be prepared by means of the same chemical operations as applied to the preparation of the triphenolic compound (B) and simultaneously with the triphenolic compound (B).

When the developer of the present invention contains the triphenolic compounds (B) and (C) as described above, the ratio of the content of the triphenolic compound (B) to the content of the triphenolic compound (A) in the developer is preferably 0.5 or more. The higher is the content of the triphenolic compound (B), the more easily the advantageous effect of the present invention is attained. The ratio of the content of the triphenolic compound (B) is more preferably 0.6 or more.

As will be described later, the developer of the present invention may contain various components other than the above described triphenolic compound (A) component as long as the advantageous effects of the present invention are not impaired. However, the developer concerned contains the triphenolic compound (A) preferably in a content of 20 wt% or more, more preferably 50 wt%, and furthermore preferably 70 wt% or more, for the purpose of making the developer of the present invention effective in attaining the desired performances.

No particular theoretical constraint is imposed on the method for preparing the triphenolic compound (B) of the present invention. Methods for condensing various phenolic compounds with formaldehyde are generally known as

convenient methods. However, according to such methods, when a triphenolic compound composed of different phenolic nuclei is intended to obtain as in the present invention, the obtained condensed product comes to be a mixture including a large number of phenol condensation products, and consequently it is difficult to efficiently prepare the desired triphenolic compound (B). Thus, it is preferable to condense a p-substituted phenol derivative represented by the general formula (2) with at least one compound of the phenolic compounds represented by the general formula (3).

By controlling the reaction conditions, it is relatively easy to make a condensation product obtained by means of the above described method be a mixture of the triphenolic compounds (B) and (C). This means that a single chemical operation can simultaneously prepare the triphenolic compounds (B) and (C), providing an advantage for avoiding a complicated operation as described in the prior art section that polyphenolic compounds having similar molecular structures and high melting points are beforehand synthesized separately, and thereafter these are mixed together to be used as a developer. An alternative advantage of the above described method is the fact that even when the condensation product mixture contains condensation product (hereinafter appropriately referred to as a condensation by-product) components other than the triphenolic compound (A), the obtained condensation products can be used almost as they are for a developer without carrying out any particular purification and separation operations to remove these condensation by-product components. Needless to say, purification or the like may be carried out according to the methods to be described later, for the purpose of further improving the performance of the developer.

It is to be noted that examples of the by-products as referred to herein may include: high molecular weight components produced by the reaction of the desired compound represented by the general formula (1) with the p-substituted phenol derivatives represented by the general formula (2); dimerized and/or trimerized dihydroxymethyl compounds contained in the preparation process of the above described p-substituted phenol derivatives; and components obtained by the condensation between the monohydroxymethyl compounds and the phenolic compounds represented by the general formula (3).

In this case, the content of the above described condensation by-products in the developer of the present invention is preferably 50 wt% or less. When the content concerned is larger than this 50 wt%, sometimes there is caused a problem that no sufficient heat resistance can be obtained, the fog in non-image areas and other like adverse effects tend to occur, depending on the applications of the recording materials, because of the decreased melting start temperature and the decreased melting point of the developer. The content of the condensation by-products is more preferably 20 wt% or less, more preferably 10 wt% or less, and furthermore preferably 5 wt% or less.

The p-substituted phenol derivatives used in the above described preparation method and represented by the general formula (2) are the compounds obtained by dihydroxymethylation of the corresponding p-substituted phenols. In the general formula (2), $R_d$ is a group selected from the group consisting of an alkyl group having 1 to 18 carbon atoms, a cycloalkyl group having 5 to 10 carbon atoms, an alkoxy group having 1 to 4 carbon atoms, a halogen atom, and an aralkyl group and an aryl group each having 7 to 14 carbon atoms; $R_d$ is preferably an ethyl group, an n-propyl group, an isopropyl group, an n-butyl group, a sec-butyl group, a t-butyl group, a dodecyl group, a cyclohexyl group, a phenyl group, an α-methylbenzyl group or α,α'-dimethylbenzyl group, and more preferably an n-propyl group, an isopropyl group, an n-butyl group, a sec-butyl group, a t-butyl group, a cyclohexyl group, a phenyl group, an α-methylbenzyl group or an α,α'-dimethylbenzyl group. $R_e$ is a group selected from the group consisting of a hydrogen atom, an alkyl group having 1 to 4 carbon atoms, an alkoxy group having 1 to 4 carbon atoms and a halogen atom, the $R_e$ groups may be the same or different, and preferred among these is a hydrogen atom or a methyl group.

Examples of such dihydroxymethylated compounds may include: 2,6-dihydroxymethyl-4-methylphenol, 2,6-dihydroxymethyl-4-ethylphenol, 2,6-dihydroxymethyl-4-n-propylphenol, 2,6-dihydroxymethyl-4-isopropylphenol, 2,6-dihydroxymethyl-4-t-butylphenol, 2,6-dihydroxymethyl-4-sec-butylphenol, 2,6-dihydroxymethyl-4-dodecylphenol, 2,6-dihydroxymethyl-3,4,5-trimethylphenol, 2,6-dihydroxymethyl-4-cyclohexylphenol, 2,6-dihydroxymethyl-4-methoxyphenol, 2,6-dihydroxymethyl-4-butoxyphenol, 2,6-dihydroxymethyl-4-t-amylphenol, 2,6-dihydroxymethyl-4-phenylphenol, 2,6-dihydroxymethyl-4-(α-methylbenzyl)phenol, 2,6-dihydroxymethyl-3-methyl-4-isopropylphenol, and 2,6-dihydroxymethyl-4-(α,α'-dimethylbenzyl)phenol.

The dihydroxymethylation of the p-substituted phenols can be carried out by means of a usual method; for example, a p-substituted phenol is reacted with formaldehyde in the presence of water and a basic catalyst, and the reaction product is neutralized or acidified with an acid to yield the desired compound.

On the other hand, phenolic compounds to be reacted with the above described p-substituted phenol derivatives are represented by the general formula (3). In the general formula (3), $R_f$ is a group selected from the group consisting of a hydrogen atom, a hydroxyl group, a halogen atom, a cyano group, an alkyl group having 1 to 18 carbon atoms, a cycloalkyl group having 5 to 10 carbon atoms, and an aralkyl group and an aryl group each having 7 to 14 carbon atoms; the $R_f$ groups may be the same or different.

Among the phenolic compounds having a molecular structure represented by formula (3), those compounds in which the $R_f$ groups are appropriately hydrogen atoms are used, and the triphenolic compounds (A) in each of which at least one of the substituents adjacent to at least one of the OH groups substituted in the left and right aromatic rings is a hydrogen atom are able to be obtained. The phenolic compounds represented by formula (3) are high in the

condensation reactivity of the para position with respect to the OH group in the formula, and hence the triphenolic compounds (A) having OH group at at least one of the 4- and 4'-positions in the left and right benzene rings are able to be obtained relatively easily.

Examples of such phenolic compounds may include: phenol, o-cresol, m-cresol, 2-ethylphenol, 3-ethylphenol, 2-isopropylphenol, 3-isopropylphenol, 2-sec-butylphenol, 2-tert-butylphenol, 3-t-butylphenol, 2-phenylphenol, 3-phenylphenol, 2-chlorophenol, 3-chlorophenol, 2-bromophenol, 3-bromophenol, 2-cyanophenol, 3-cyanophenol, 2,3-dimethylphenol, catechol, and resorcinol.

From the viewpoints of the performance of the developer obtained therefrom, inexpensive price and easy availability, preferred among these are phenols having substituents only at the 3-position and/or 5-position and non-substituted phenols in each of which all the $R_f$ groups are hydrogen atoms. Catechol and resorcin each have two OH groups and hence are favorable for obtaining high-sensitivity developers, but on the other hand, there tends to occur a problem that the water solubilities thereof are increased because of many hydrophilic substituents contained in the molecule thereof and the color formation thereby occurs at the stage of mixing the developer with a leuco dye in a water dispersion medium to form a color forming material composition, or the fog in non-image areas occurs in the moisture resistance test. Accordingly, when these phenolic compounds are used, it is preferable to select the p-substituted phenol derivatives, represented by formula (2), in which the substituents $R_d$ and $R_e$ are highly hydrophobic.

The developer compositions of the present invention are able to be prepared by use of the above described p-substituted phenol derivatives and the above described phenolic compounds according to a method well known in the art. For example, a predetermined amount of one of the above described p-substituted phenol derivatives and one of the above described phenolic compounds are reacted by heating with each other in the presence of an appropriate acid catalyst, and a condensation therebetween is thus caused to yield a condensation product containing as the main component the triphenolic compound (A) represented by the general formula (1). In this condensation reaction, the phenolic compound is generally high in reactivity at the para and ortho positions with respect to the OH group shown in formula (3), and consequently the triphenolic compound (A) obtained as described above relatively easily can be made to be a mixture composed of the triphenolic compound (B) and the triphenolic compound (C).

By regulating the molar ratio of the phenolic compound to the p-substituted phenol derivative, both used in the condensation reaction, the above described content of the condensation by-products in the developer can be controlled. For example, when the content of the condensation by-products is made to be 50 wt% or less, it is preferable that the phenolic compound is used in an amount of 10 times or more, preferably 20 times or more by mole the amount of the p-substituted phenol derivative. As an alternative method, the p-substituted phenol derivative may be successively introduced into a reaction system which contains the phenolic compound arranged beforehand.

The condensation product thus obtained can be used as it is as a developer; however particularly when the purity of the developer is required, the condensation product may be used as a developer after it has been purified by means of any one of the common purification methods including a method in which the condensation product is once dissolved in a good solvent and then the solution is added into a poor solvent to reprecipitate the condensation product, a method in which the product is washed with a solvent capable of dissolving other condensates, and a method in which the product is added into a solvent and dissolved therein by heating, and then cooled for recrystallization.

As other developers capable of forming color from colorless or light-colored dye precursors usable in combination with the developer of the present invention, there may be cited phenol derivatives represented by the general formula (4), hydroxybenzoic acid derivatives, salicylic acid derivatives, sulfonylurea compounds, urea-urethane compounds and the like. Specific examples of these compounds will be described below, but the above described other developers are not limited to these examples.

[Formula 4]

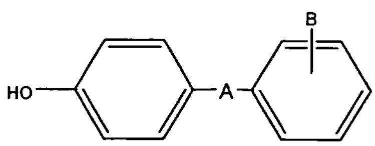

.... (4)

wherein each of the hydrogen atoms bonded to the aromatic rings may be substituted by a hydroxyl group, an alkyl group, an aryl group, an alkoxy group, a phenyl group and a substituted phenyl group; A is a group selected from $-CR^1R^2-$, $-SO_2-$, -O-, -CO-, -CONH-,-NH-, -OCOO-, -NHCONH-, -NHCOO-, $-CH(COOR^3)-$, $-C(CF_3)_2-$, $-OCH_2CH_2O-$ and a cyclohexylidene group; $R^1$, $R^2$ and $R^3$ each represent a hydrogen atom, an alkyl group or a phenyl group; and B is a group selected from a hydroxyl group, an alkoxy group and a group represented by the following formula (5):

[Formula 5]

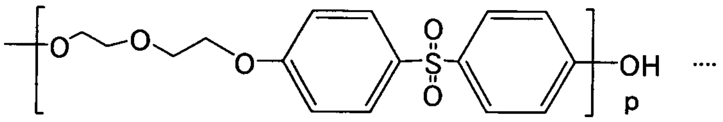

(5)

wherein p is an integer of 1 to 7.

Examples of the phenol derivatives represented by the general formula (4) may include 2,2-bis(4'-hydroxyphenyl)propane, 2,2-bis(hydroxyphenyl)butane, 2,2-bis(hydroxyphenyl)heptane, 4,4'-(1,3-dimethylbutylidene)bisphenol, 1,1-bis(4-hydroxyphenyl)cyclohexane, butyl bis(4-hydroxyphenyl)acetate, benzyl bis(4-hydroxyphenyl)acetate, 4,4'-(1,3-dimethylbutylidene)bisphenol, 2,4-dihydroxy-2'-methoxy-benzanilide, n-butyl bis(4-hydroxyphenyl)acetate, 1-(4-carboxy-3-hydroxyphenoxy)-2-(4-methoxyphenoxy)ethane, 4,4'-dihydroxydiphenylsulfone, bis(3-methyl-4-hydroxyphenyl)sulfone, 4-hydroxyphenyl-4'-methylphenylsulfone, 3-chloro-4-hydroxyphenyl-4'-methylphenylsulfone, 3,4-dihydroxyphenyl-4'-methylphenylsulfone, 2,4'-dihydroxydiphenylsulfone, bis-(3-allyl-4-hydroxyphenyl)sulfone, 4-hydroxy-4'-isopropoxydiphenylsulfone, 4-hydroxyphenyl-4'-benzyloxyphenylsulfone, 4-isopropylphenyl-4'-hydroxyphenylsulfone, bis(2-methyl-3-t-butyl-4-hydroxyphenyl)sulfide, 1-(4'-methoxyphenyloxy)-2-(3'-hydroxy-4'-carboxyphenyloxy) ethane, a developer containing as the main component 4,4'-[oxybis(ethyleneoxy-p-phenylenesulfone)]diphenol (manufactured by Nippon Soda Co., Ltd.:D-90).

Examples of the hydroxybenzoic acid derivatives may include methyl 4-hydroxybenzoate, ethyl 4-hydroxybenzoate, butyl 4-hydroxybenzoate, benzyl 4-hydroxybenzoate, 4-hydroxybenzoate, (4'-chlorobenzyl), ethyl 1,2-bis(4'-hydroxybenzoate), pentyl 1,5-bis(4'-hydroxybenzoate) and 1,6-bis(hexyl 4'-hydroxybenzoate).

Examples of the salicylic acid derivatives may include: 4-n-octyloxysalicylic acid, 4-n-butyloxysalicylic acid, 4-n-pentyloxysalicylic acid, 3-n-dodecyloxysalicylic acid, 3-n-octanoyloxysalicylic acid, 4-octyloxycarbonylaminosalicylic acid and 4-n-octanoyloxycarbonylaminosalicylic acid, and metal salts thereof.

Examples of the sulfonylurea compounds may also include compounds containing at least one arylsulfonylaminoureido group such as 4,4'-bis(p-toluenesulfonylaminocarbonylamino)diphenylmethane, 4,4'-bis(p-toluenesulfonylaminocarbonylamino)diphenyl sulfide, 4,4'-bis(p-toluenesulfonylaminocarbonylamino)diphenyl ether and N-(p-toluenesulfonyl)-N'-phenylurea.

As for the urea-urethane compounds, the definition thereof is found in WO 00/14058 A and JP-A-2002-332271, and examples thereof may include a developer UU manufactured by Asahi Kasei Corp.

These other developers to be used simultaneously with the developer of the present invention may be used in combinations of two or more thereof according to need. A small proportion of these other developers are generally able to simultaneously have a satisfactory sensitivity and a satisfactory image stability of recorded images; those simultaneously able to have these properties in satisfactory conditions involve a drawback that they are expensive and thereby poor in economic efficiency. However, the use of these other developers as mixed and in combination with the developer of the present invention makes it possible to attain practically satisfactory performances in the sensitivity, image stability of recorded images, fog in non-image areas and economic efficiency.

An excellent color forming material composition for recording materials can be prepared from the developer of the present invention and dye precursors. As the dye precursors to be used in this case, there can be used chemical substances well known in the art as the color forming materials used in pressure-sensitive recording materials and thermal recording materials, and no particular constraint is imposed on the precursors. However, preferred are usually colorless or light-colored leuco dyes such as triarylmethane leuco dyes, fluoran leuco dyes, fluorene leuco dyes and diphenylmethane leuco dyes.

Examples of the typical leuco dyes are listed below.

(1) Triarylmethane Compounds

3,3-bis(p-dimethylaminophenyl)-6-dimethylaminophthalide (crystal violet lactone), 3,3-bis(p-dimethylaminophenyl)phthalide, 3-(p-dimethylaminophenyl)-3-(1,2-dimethylindol-3-yl)phthalide, 3-(p-dimethylaminophenyl)-3-(2-methylindol-3-yl)phthalide, 3-(p-dimethylaminophenyl)-3-(2-phenylindol-3-yl)phthalide, 3,3-bis(1,2-dimethylindol-3-yl)-5-dimethylaminophthalide, 3,3-bis(1,2-dimethylindol-3-yl)-6-dimethylaminophthalide, 3,3-bis(9-ethylcarbazol-3-yl)-5-dimethylaminophthalide, 3,3-bis(2-phenylindol-3-yl)-5-dimethylaminophthalide, and 3-p-dimethylaminophenyl-3-(1-methylpyrrol-2-yl)-6-dimethylaminophthalide.

(2) Diphenylmethane Compounds

4,4-bis-dimethylaminophenylbenzhydrylbenzyl ether, N-halophenylleuco auramine, N-2,4,5-trichlorophenylleuco auramine and the like.

(3) Xanthene Compounds

rhodamine B anilinolactam, rhodamine B-p-chloroanilinolactam, 3-dimethylamino-6-methyl-7-(m-trifluoromethylanilino)fluoran, 3-diethylamino-6-methyl-fluoran, 3-diethylamino-7-methyl-fluoran, 3-diethylamino-7-chloro-fluoran, 3-diethylamino-7-dibenzylaminofluoran, 3-diethylamino-6-methyl-7-chlorofluoran, 3-diethylamino-7-octylaminofluoran, 3-diethylamino-7-phenylfluoran, 3-diethylamino-6-methyl-7-anilinofluoran, 3-diethylamino-6-methyl-7-p-methylanilinofluoran, 3-diethylamino-6-methyl-7-m-methylanilinofluoran, 3-diethylamino-6-chloro-7-methylfluoran, 3-diethylamino-7-(3,4-dichloroanilino)fluoran, 3-diethylamino-7-(2-chloroanilino)fluoran, 3-diethylamino-6-methyl-7-(o,p-dimethylanilino)fluoran, 3-diethylamino-6-methyl-7-(2,6-xylidino)fluoran, 3-(N-ethyl-N-isobutylamino)-6-methyl-7-anilinofluoran, 3-(N-ethyl-N-ethoxypropylamino)-6-methyl-7-anilinofluoran, 3-(N-ethyl-N-tolyl)amino-6-methyl-7-phenethylfluoran, 3-diethylamino-7-(o-fluoro)anilinofluoran, 3-diethylamino-7-trifluoromethylanilinofluoran, 3-diethylamino-7-(4-nitroanilino)fluoran, 3-diethylamino-6-methyl-7-(m-trifluoromethylanilino)fluoran, 3-diethylamino-6-methyl-7-(o-chloroanilino)fluoran, 3-diethylamino-6-methyl-7-(p-chloroanilino)fluoran, 3-diethylamino-6-methyl-7-(o-fluoroanilino)fluoran, 3-diethylamino-6-methyl-7-(p-n-butylanilino)fluoran, 3-diethylamino-6-methyl-7-n-octylaminofluoran, 3-diethylamino-6-chloro-7-anilinofluoran, 3-diethylamino-6-ethoxyethyl-7-anilinofluoran, 3-diethylamino-benzo[a]fluoran, 3-diethylamino-benzo[c]fluoran, 3-diethylamino-6-methyl-7-benzylaminofluoran, 3-diethylamino-6-methyl-7-dibenzylaminofluoran, 3-diethylamino-7-di(p-methylbenzyl)aminofluoran, 3-diethylamino-6-methyl-7-diphenylmethylaminofluoran, 3-diethylamino-7-dinaphthylmethylaminofluoran, 10-diethylamino-4-dimethylaminobenzo[a]fluoran, 3-diethylamino-7,8-benzfluoran, 3-diethylamino-6-methyl-7-(m-trichloroanilino)fluoran, 3-diethylamino-7-(o-chloroanilino)fluoran, 3-dibutylamino-7-(o-chloroanilino)fluoran, 3-diethylamino-6-methyl-7-(2',4'-dimethylanilino)fluoran, 3-(N,N-diethylamino)-5-methyl-7-(N,N-dibenzylamino)fluoran, 3-morpholino-7-(N-propyltrifluoromethylanilino)fluoran, 3-pyrrolidino-7-trifluoromethylanilinofluoran, 3-diethylamino-5-chloro-7-(N-benzyl-trifluoromethylanilino)fluoran, 3-pyrrolidino-7-(di-p-chlorophenyl)methylaminofluoran, 3-diethylamino-5-chloro-7-(α-phenylethylamino)fluoran, 3-(N-ethyl-N-p-toluidino)-7-(α-phenylethylamino)fluoran, 3-diethylamino-7-(o-methoxycarbonylphenylethyl)fluoran, 3-diethylamino-5-methyl-7-(α-phenylethylamino)fluoran, 3-diethylamino-7-piperidinoaminofluoran, 2-chloro-3-(N-methyltoluidino)-7-(p-N-butylanilino)fluoran, 3-(N-ethyl-N-cyclohexylamino)-5,6-benzo-7-α-naphthylamino-4'-bromofluoran, 3-diethylamino-6-methyl-7-mesitydino-4',5'-benzofluoran, 3-dibutylamino-6-methyl-fluoran, 3-dibutylamino-6-methyl-7-chlorofluoran, 3-dibutylamino-6-methyl-7-anilinofluoran, 3-dibutylamino-6-methyl-7-p-methylanilinofluoran, 3-dibutylamino-6-methyl-7-(o,p-dimethylanilino)fluoran, 3-dibutylamino-6-methyl-7-(m-trifluoromethylanilino)fluoran, 3-dibutylamino-6-methyl-7-(o-chloroanilino)fluoran, 3-dibutylamino-6-methyl-7-(p-chloroanilino)fluoran, 3-dibutylamino-6-methyl-7-(o-fluoroanilino)fluoran, 3-dibutylamino-7-(o-fluoroanilino)fluoran, 3-dibutylamino-6-methyl-7-(p-n-butylanilino)fluoran, 3-dibutylamino-6-methyl-7-n-octylaminofluoran, 3-dibutylamino-6-chloro-7-anilinofluoran, 3-dibutylamino-6-ethoxyethyl-7-anilinofluoran, 3-di-n-pentylamino-6-methyl-7-anilinofluoran, 3-di-n-pentylamino-6-methyl-7-(o,p-dimethylanilino)fluoran, 3-di-n-pentylamino-6-methyl-7-(m-trifluoromethylanilino)fluoran, 3-di-n-pentylamino-6-methyl-7-(o-chloroanilino)fluoran, 3-di-n-pentylamino-6-methyl-7-(p-chloroanilino)fluoran, 3-din-pentylamino-6-methyl-7-(o-fluoroanilino)fluoran, 3-pyrrolidino-6-methyl-7-anilinofluoran, 3-piperidino-6-methyl-7-anilinofluoran, 3-cyclohexylamino-6-chlorofluoran, 3-dimethylamino-5,7-dimethylfluoran, 3-(N-methyl-N-isoamylamino)-6-methyl-7-anilinofluoran, 3-(N-methyl-N-n-propylamino)-6-methyl-7-anilinofluoran, 3-(N-methyl-N-amylamino)-6-methyl-7-anilinofluoran, 3-(N,N-di-n-amylamino)-6-methyl-7-anilinofluoran, 3-(N-methyl-N-iso-propylamino)-6-methyl-7-anilinofluoran, 3-(N-ethyl-N-n-propylamino)-6-methyl-7-anilinofluoran, 3-(N-ethyl-N-iso-propylamino)-6-methyl-7-anilinofluoran, 3-(N-ethyl-N-n-butylamino)-6-methyl-7-anilinofluoran, 3-(N-ethyl-N-iso-butylamino)-6-methyl-7-anilinofluoran, 3-(N-ethyl-N-n-hexylamino)-6-methyl-7-p-methylanilinofluoran, 3-(N-ethyl-N-n-hexylamino)-6-methyl-7-(o,p-dimethylanilino)fluoran, 3-(N-ethyl-N-n-hexylamino)-6-methyl-7-(m-trifluoromethylanilino)fluoran, 3-(N-ethyl-N-n-hexylamino)-6-methyl-7-(o-chloroanilino)fluoran, 3-(N-ethyl-N-iso-amylamino)-6-methyl-7-anilinofluoran, 3-(N-ethyl-N-iso-amylamino)-6-chloro-7-anilinofluoran, 3-(N-ethyl-N-3-methylbutylamino)-6-methyl-7-anilinofluoran, 3-(N-ethyl-N-p-toluidino)-6-methyl-7-anilinofluoran, 3-(N-ethyl-N-p-toluidino)-6-methyl-7-(p-methylanilino)fluoran, 3-(N-ethyl-N-p-toluidino)-6-methyl-7-(o,p-dimethylanilino)fluoran, 3-(N-ethyl-N-tetrahydrofurfurylamino)-6-methyl-7-anilinofluoran, 3-(N-cyclohexyl-N-methylamino)-6-methyl-7-anilinofluoran, 3-(N-cyclohexyl-N-methylamino)-7-anilinofluoran, 3-(N-ethyl-N-3-methoxypropylamino)-6-methyl-7-anilinofluoran, 3-(N-ethyl-N-3-ethoxypropylamino)-6-methyl-7-anilinofluoran, 2-(4-oxahexyl)-3-dimethylamino-6-methyl-7-anilinofluoran, 2-(4-oxahexyl)-3-diethylamino-6-methyl-7-anilinofluoran, 2-(4-oxahexyl)-3-dipropylamino-6-methyl-7-anilinofluoran, 3,6-bis(diethylamino)fluoran-γ-(2'-nitro)anilinolactam, 3,6-bis(diethylamino)fluoran-γ-(3'-nitro)anilinolactam, 3,6-bis(diethylamino)fluoran-γ-(4'-nitro)anilinolactam, and 3,6-bis(diethylamino)fluoran-γ-anilinolactam.

(4) Thiazine Compounds

Benzoylleucomethylene blue, p-nitrobenzoylleucomethylene blue and the like.

(5) Spiro Compounds

3-Methylspirodinaphthopyran, 3-ethylspirodinaphthopyran, 3,3-dichlorospirodinaphthopyran, 3-benzylspirodinaphthopyran, 3-methylnaphtho-(3-methoxybenzo)spiropyran, 3-propylspirobenzopyran and the like.

Additionally, the following compounds having near infrared absorption regions and the like may be cited: 3,6-bis (dimethylamino)fluorene-9-spiro-3'-(6'-dimethylaminophthalide), 3-diethylamino-6-dimethylaminofluorene-9-spiro-3'-(6'-dimethylaminophthalide), 3,6-bis(diethylamino)fluorene-9-spiro-3'-(6'-dimethylaminophthalide), 3-dibutylamino-6-dimethylaminofluorene-9-spiro-3'-(6'-dimethylaminophthalide), 3-dibutylamino-6-diethylaminofluorene-9-spiro-3'-(6'-dimethylaminophthalide), 3,6-bis (dimethylamino) fluorene-9-spiro-3'-(6'-diethylaminophthalide), 3-diethylamino-6-dimethylaminofluorene-9-spiro-3'-(6'-diethylaminophthalide), 3-dibutylamino-6-dimethylaminofluorene-9-spiro-3'-(6'-diethylaminophthalide), 3,6-bis(diethylamino)fluorene-9-spiro-3'-(6'-diethylaminophthalide), 3,6-bis(dimethylamino)fluorene-9-spiro-3'-(6'-dibutylaminophthalide), 3-dibutylamino-6-diethylaminofluorene-9-spiro-3'-(6'-diethylaminophthalide), 3-diethylamino-6-dimethylaminofluorene-9-spiro-3'-(6'-dibutylaminophthalide), and 3,3-bis[2-(4-dimethylaminophenyl)-2-(4-methoxyphenyl)ethenyl]-4,5,6,7-tetrachlorophthalide.

Among these, the triarylmethane leuco dyes, fluoran leuco dyes, fluorene leuco dyes and diphenylmethane leuco dyes are particularly preferable from the viewpoints of the sensitivity and the image stability of recorded images. These leuco dyes may be used in combinations of two or more thereof, according to need.

The used amount of the developer in the color forming material composition of the present invention is usually 5 to 1000 parts by weight, preferably 10 to 500 parts by weight, and more preferably 30 to 300 parts by weight in relation to 100 parts by weight of the dye precursor. When the amount of the developer is small, the color forming density is low to be not practically applicable. When the amount of the developer is too large, the color forming density reaches a saturated value to be economically disadvantageous.

When the color forming material composition of the present invention is used as a thermal recording material, a sensitizer may be contained in the color forming material composition for the purpose of improving the sensitivity of the recording material. In general, the sensitizer is a chemical substance capable of being melted by heat, and has preferably a melting point of 60°C to 180°C, and particularly preferably 80°C to 140°C. Examples of the sensitizer may include: stearic acid amide and an emulsion thereof, palmitic acid amide, behenic acid amide, N-methylolstearic acid amide, β-naphthyl benzyl ether, N-stearylurea, N,N'-distearylurea, β-naphthoic acid phenyl ester, 1-hydroxy-2-naphthoic acid phenyl ester, β-naphthol-(p-methylbenzyl) ether, 1,4-dimethoxynaphthalene, 1-methoxy-4-benzyloxynaphthalene, N-stearoylurea, p-benzylbiphenyl, 1,2-diphenoxyethane, 1,2-di(m-methylphenoxy)ethane, 1,2-diphenoxymethylbenzene, 1,2-bis(3,4-dimethylphenyl)ethane, 1-phenoxy-2-(4-chlorophenoxy)ethane, 1,4-butanediol phenyl ether, dimethyl terephthalate, dibenzyl terephthalate, m-terphenyl, dibenzyl oxalate, di-p-methylbenzyl oxalate and di(p-chlorobenzyl) oxalate.

Additionally, the following compounds are preferable because these are highly effective in improving the sensitivity of recording materials: 4,4'-dimethoxybenzophenone, 4,4'-dichlorobenzophenone, 4,4'-difluorobenzophenone, diphenylsulfone, 4,4'-dichlorodiphenylsulfone, 4,4'-difluorodiphenylsulfone, 4,4'-dichlorodiphenyl disulfide, diphenylamine, 2-methyl-4-methoxydiphenylamine, N,N'-diphenyl-p-phenylenediamine, 1-(N-phenylamino)naphthalene, 1,3-diphenyl-1,3-propanedione and the like.

Preferably used among these are diphenylsulfone, di-p-methylbenzyl oxalate, benzyl p-hydroxybenzoate, β-naphthyl benzyl ether, p-benzylbiphenyl, 1,2-di(m-methylphenoxy)ethane, 1,2-diphenoxymethylbenzene, m-terphenyl and stearic acid amide.

The above described sensitizers may be used each alone or in combinations of two or more thereof. The used amount of the sensitizer(s) is usually 0 to 1000 parts by weight, preferably 0 to 500 parts by weight, and more preferably 1 to 300 parts by weight in relation to 100 parts by weight of the dye precursor. When the sensitizer amount is small, it is difficult to increase the thermal response of recording materials. When the sensitizer amount is too large, the thermal response reaches a saturated value to be disadvantageous economically.

As described above, the color forming material composition of the present invention contains as the main components thereof a dye precursor and the developer of the present invention, and a sensitizer is also used simultaneously according to need; optionally according to need, the color forming material composition can further contain other additives described below such as a lubricant, a binder, a filler, a dispersant and a image-stability-imparting agent.

The lubricant is added for the purpose of preventing abrasion, sticking, and the like of the thermal head or the like, and is a substance which is solid at normal temperature and has a melting point of 70°C or higher; examples thereof may include waxes such as a wax of animal or vegetable origin and a synthetic wax; higher fatty acids and metal salts thereof; higher fatty acid amides; and higher fatty acid anilides. Specific examples of the waxes may include: vegetable

wax, carnauba wax, shellac, paraffin, montan wax, oxidized paraffin, polyethylene wax and oxidized polyethylene; specific examples of the higher fatty acids and the metal salt thereof may include stearic acid and behenic acid and the metal salts thereof, namely, zinc stearate, calcium stearate; specific examples of the higher fatty acid amides may include oleic aicd amide, N-methylstearic acid amide, erucic acid amide, methylolbehenic acid amide, methylenebisstearic acid amide and ethylenebisstearic acid amide; and specific examples of the higher fatty acid anilides may include stearic acid anilide and linoleic acid anilide.

The used amount of each of these lubricant is optional, but preferably two or less times the used amount of the leuco dye.

Specific examples of the binders usable in the present invention may include: water-soluble substances such as methylcellulose, methoxycellulose, hydroxyethylcellulose, carboxymethylcellulose, sodium carboxymethylcellulose, cellulose, polyvinyl alcohol, carboxy-modified polyvinyl alcohol, sulfonic acid group-modified polyvinyl alcohol, polyvinylpyrrolidone, polyacrylamide, polyacrylic acid, starch or derivatives thereof, casein, gelatin, water-soluble isoprene rubber, alkali salts of styrene/maleic anhydride copolymer, alkali salts of iso(or diiso)butylene/maleic anhydride copolymer; and hydrophobic polymer emulsions of polyvinyl acetate, vinyl chloride/vinyl acetate copolymer, polystyrene, polyacrylate, polyurethane, styrene/butadiene copolymer, carboxylated styrene/butadiene copolymer, styrene/butadiene/acrylic acid copolymer, and a composite particle material made of colloidal silica and acrylic resin.

Specific examples of the fillers usable in the present invention may include: calcium carbonate, magnesium carbonate, magnesium oxide, silica, white carbon, talc, clay, alumina, magnesium hydroxide, aluminum hydroxide, aluminum oxide, barium sulfate, polystyrene resin and urea-formalin resin. The added amount of the filler is 0 to 1000 parts by weight, preferably 0 to 500 parts by weight, and more preferably 0 to 300 parts by weight in relation to 100 parts by weight of the leuco dye.

Specific examples of the dispersants usable in the present invention may include: water soluble polymers such as polyvinyl alcohol, carboxylic acid-modified polyvinyl alcohol, sulfonic acid-modified polyvinyl alcohol, methylcellulose, hydroxypropylmethylcellulose, hydroxypropylcellulose and alkali salts of styrene/maleic anhydride copolymer; anionic surfactants such as condensed naphthalenesulfonic acid salts, polyoxyethylenealkyl ether sulfuric acid ester salts (for example, sodium polyoxyethylene lauryl ether sulfate, sodium polyoxyethylene alkyl ether sulfate, and sodium polyoxyethylene alkylphenyl ether sulfate), sodium dialkyl sulfosuccinate, alkyl phosphoric acid salts (for example, alkyl phosphate diethanolamine and potassium alkyl phosphate) and special carboxylic acid polymers; nonionic surfactants such as polyoxyethylene alkyl ether, polyoxyethylene alkylphenyl ether, polyoxyethylene sorbitan fatty acid ester, fatty acid monoglyceride and polyethylene glycol fatty acid ester; and cationic surfactants such as dicyanamide polyamine, tertiary amine salts and quaternay ammonium salts. Particularly preferred among these are polyvinyl alcohol, carboxylic acid-modified polyvinyl alcohol, sulfonic acid-modified polyvinyl alcohol, alkali salts of styrene/maleic acid copolymer, methylcellulose and sodium polyoxyethylene alkyl ether sulfate. These dispersants may be used each alone or as admixtures thereof.

The image-stability-imparting agent used in the present invention means additives such as an image stabilizer, a photostabilizer and an antioxidant. The use of these image-stability-imparting agents in combination with the color forming material of the present invention makes it possible to improve the photostability of the color forming material to yield recording materials excellent in photostability. Examples of image stabilizers as preferred examples of the image-stability-imparting agents used in the present invention may include: hindered phenol compounds such as 1,1,3-tris (2-methyl-4-hydroxy-5-t-butylphenyl)butane, 1,1,3-tris(2-methyl-4-hydroxy-5-cyclohexylphenyl)butane, 4,4'-butylidenebis(2-t-butyl-5-methylphenol), 4,4'-thiobis(2-t-butyl-5-methylphenol), 2,2'-thiobis(6-t-butyl-4-methylphenol) and 2,2'-methylenebis(6-t-butyl-4-methylphenol); and 4-benzyloxy-4'-(2-methylglycidyloxy)diphenylsulfone, 4,4'-diglycidyloxydiphenylsulfone, 1,4-diglycidyloxybenzene, sodium-2,2'-methylenebis(4,6-dit-butylphenyl)phosphate, 2-propanol derivatives and salicylic acid derivatives. Usually, each of these image stabilizers is used preferably in an amount of 5 to 1000 parts by weight and more preferably 10 to 500 parts by weight in relation to 100 parts by weight of the dye precursor. When the amount of the image stabilizer exceeds 5 parts by weight, the photostability is satisfactory and the color forming density is also high. When the amount of the image stabilizer exceeds 1000 parts by weight, the effect on the photostability is not improved, and additionally disadvantageous economically.

The brightness may be improved by further adding a fluorescent dye to the color forming material composition of the present invention. As the fluorescent dye, various compounds well known in the art can be used, and examples of such compounds may include stilbene derivatives, coumarine derivatives, pyrazoline derivatives, bisstyrylbiphenyl derivatives, naphthalimide derivatives and bisbenzooxazolyl derivatives. Although the fluorescent dye is not limited to these examples, diaminostilbenedisulfonic acid derivatives are particularly preferable. The used amount of the fluorescent dye is preferably 0.01 to 3 wt% and more preferably falls in a range from 0.1 to 2 wt%, in relation to total solid content of the color forming material. When the used amount of the fluorescent dye exceeds 3 wt%, sometimes the color forming material is colored, while when the used amount of the fluorescent dye is less than 0.01 wt%, the effect on the brightness is degraded.

The color forming material composition of the present invention can be used for various recording materials

such as thermal recording materials, pressure-sensitive recording materials, and particularly suitable for thermal recording materials.

Thermal recording materials generally have a structure in which a thermal recording layer capable of forming color by heating is arranged on a support. More specifically, developers, dye precursors, thermofusible compounds and others are admixed in a form of a dispersion liquid, and the dispersion liquid is applied onto the support together with other necessary components to form a thermal recording layer. In preparation of the dispersion liquid, one or a plurality of the compounds belonging to these individual components are finely pulverized in an aqueous solution containing a dispersant with a sand grinder or the like to yield the dispersion liquid. The particle size of the dispersed particles in the dispersion liquid preferably falls within a range from 0.1 to 10 μm, and more preferably is approximately 1 μm.

When the developer of the present invention is used for thermal recording materials, by setting the mean particle size of the finely pulverized developer particles be 0.05 μm or more and 5 μm or less, there are obtained thermal recording materials satisfactory in thermal response and also satisfactory in image stability of color-formed recorded images. When the mean particle size is less than 0.05 μm, the non-image-area image stability is degraded, while when the mean particle size is larger then 5 μm, the sensitivity of the thermal recording materials deteriorates. The mean particle size is more preferably 0.1 μm or more and 3 μm or less.

When the developer of the present invention is wet pulverized in an aqueous medium, the liquid temperature of the aqueous medium used is preferably 60°C or lower. When the liquid temperature is 60°C or higher, the developer is modified and aggregated depending on other conditions, leading to a fear of causing the fog in non-image areas and sensitivity degradation in the thermal recording material used.

When the developer is pulverized, the pulverization is preferably carried out in a neutral pH range from 5 to 10. With the pH less than 5 in the pulverization, decomposition of inorganic pigments and others is caused when a thermal coating liquid is prepared to lead to a fear of degrading the sensitivity, while with the pH larger than 10, sometimes the developer is modified and the sensitivity is degraded.

As for pulverizing the developer, by finely pulverizing (copulverizing) the developer together with the above described sensitizer, there is obtained an advantageous effect that the sensitivity of the thermal recording material is further improved and the record image stability thereof is also further improved as compared to a case where the individual components are separately finely pulverized to be mixed together thereafter, although the reason for that is not clear.

As the support for the thermal recording layer, paper is mainly used, but there can be optionally used the following materials other than paper according to the purposes: various woven and nonwoven fabrics, synthetic resin films, laminated papers, synthetic papers, metal foils and composite sheets made of combining these materials. The basis weight of the support is desirably 40 g/m$^2$ to 200 g/m$^2$, and it is desirable to surface-treat the support by applying heat and pressure with a machine calendar, a soft calendar, a super calendar and the like because the support is desired to have a planarity as high as possible as a thermal recording material, that is, the support is desired to be excellent in surface smoothness and planarity.

The surface pH of the support is preferably 3 to 12. When the surface pH of the support is less than 3, the fog in non-image areas tends to occur, while when the surface pH exceeds 12, sometimes the developer is modified and the color forming density is degraded. The surface pH is more preferably 5 to 9, and furthermore preferably 6 to 8.

The thermal recording layer may be constituted with a single layer or a plurality of layers. For example, the individual color forming components each may be contained in a layer to form a multilayer structure. On the thermal recording layer, a protective layer composed of a single layer or a plurality of layers may be arranged, or an intermediate layer composed of a single layer or a plurality of layers may be arranged between the support and the thermal recording layer. The thermal recording layer can be obtained by applying onto the support a mixture prepared by mixing aqueous dispersion liquids obtained by finely pulverizing the individual color forming components and other components with binders and the like, and then by drying the layer thus formed.

The color forming materials of the present invention can be used as various thermal recording materials, and are particularly suitable as thermal magnetic recording materials, thermal recording labels, multi-color thermal recording materials, laser-marking thermal recording materials. When the thermal recording material is a thermal magnetic recording material, preferable is a form in which a developer-containing thermal recording layer is arranged on one side of the support, and a magnetic recording layer is arranged on the other side. The magnetic recording layer in a thermal magnetic recording material is formed, for example, by applying onto a support a coating material prepared by uniformly dispersing ferromagnetic powders of barium ferrite, strontium ferrite, Co-γ-$Fe_2O_2$, γ-$Fe_2O_2$ and the like in an aqueous binder composed of an aqueous emulsion resin or the like, and by drying the layer thus formed. In this case, according to the purposes, there may be added various additives including an antistatic agent such as carbon graphite, a wax as a lubricant, a coloring pigment to regulate the hue and polyethylene oxide as a coating film softener. The thermal magnetic recording materials of the present invention are suitable as thermal magnetic recording materials for transportation tickets, other tickets, prepaid cards and the like.

When the thermal recording material is a thermal recording label, preferable is a form in which a developer-containing thermal recording layer is arranged on one side of the support, and an adhesive layer is arranged on the other

side. The adhesive layer of the thermal recording material contains as the main component a pressure-sensitive adhesive, and examples of the pressure-sensitive adhesive may include synthetic rubber emulsion adhesives, acrylic emulsion adhesives, natural rubber solvent adhesives, acrylic solvent adhesives, and silicon solvent adhesives; particularly preferred among these are acrylic emulsion adhesives.

Additionally, when a back side layer (back coat layer) is arranged according to need between the adhesive layer and the support in the thermal recording label prepared by the method of the present invention, the curling of the thermal recording label can be straightened, the static electrification thereof cab be prevented, and the friction coefficient thereof can be controlled. As for the coating liquid component for the back side layer, the application method thereof and the like, the same method as in forming the thermal recording layer can be adopted.

When the thermal recording label is prepared, no particular constraint is imposed on the order of the coating operations. However, among some possible cases are, for example, a case in which the thermal recording layer is arranged on one side of the support, and thereafter the back coat layer is arranged and the adhesive layer is further arranged on the other side to prepare the label concerned; and a case in which the back coat layer is arranged on one side of the support, and thereafter the thermal recording layer is arranged on the other side, and the adhesive layer is further arranged on the back coat layer. As for the method for arranging the adhesive layer on the back coat layer, a liquid for forming the adhesive layer may be directly applied onto the back coat layer to be dried thereafter, or the liquid for forming the adhesive layer is applied onto a release paper to be dried thereafter, and the release paper may be laminated on the back-coat layer side of the thermal recording material yet having no adhesive layer arranged thereon. By arranging an intermediate layer composed of a single layer or a plurality of layers between the thermal recording layer and the support, the thermal response can be improved. The intermediate layer is mainly composed of organic and inorganic pigments, microballoons, and aqueous binders such as water-soluble polymers and latex; there can be used organic and inorganic pigments and aqueous binders similar to those used in the thermal recording layer. No particular constraint is also imposed on the method for forming the intermediate layer, and a method similar to the method for forming the thermal recording layer can be used. The thermal recording layer of the thermal recording label contains as the main components thereof color forming materials undergoing color forming reactions based on the material contact caused by heating and an adhesive, and can be added with cross-linking agents, pigments and sensitizers according to need. In this case of application, either a water-soluble or a water-dispersible resin can be used for the adhesive contained in the thermal color forming layer. However, it is a prerequisite that when the adhesive is mixed with the dispersion liquid of the leuco dye and the dispersion liquid of the developer composition, the mixed solutions thus obtained do not undergo color formation, aggregation or transformation into highly viscous conditions; it is also necessary that the surface layer of the formed thermal recording layer be tough and no desensitizing effect be found. The blending amount of the adhesive in the thermal color forming layer is preferably 5 to 20% in relation to the solid content of the thermal color forming layer; the blending amount of less than 5% causes as a drawback the low coating layer strength, and the blending amount exceeding 20% causes as a problem the sensitivity degradation. Additionally, for the purpose of improving the water resistance of the thermal color forming layer, a cross-linking agent for curing a resin may be used.

When the thermal recording material is a multi-color thermal recording material, preferable is a form in which a thermal recording layer composed of at least two layers is arranged on one side of the support, and at least one layer of the thermal recording layer contains the developer of the present invention. As the support, the following materials and others can be used: a synthetic paper prepared by the method in which a polyolefin resin and a white inorganic pigment is kneaded under heating, and thereafter the obtained mixture is extruded from a die and stretched longitudinally, a film made of a polyolefin resin and a white inorganic pigment is laminated on each side of the stretched mixture so as to form one or two layers per one side, and the obtained laminate is transversely stretched to produce a half-transparent or an opaque synthetic paper; a film prepared by the method in which thermoplastic resins such as polyethylene, polypropylene, ethylene-vinyl acetate copolymer resin, polyvinyl chloride, polystyrene and polyester are used each alone or admixtures thereof, the selected one or more resins are kneaded under heating and thereafter extruded from a die, and the extruded material is subjected to biaxial orientation to produce a film; an opaque film prepared by a method in which one or more of these resins and a white inorganic pigment are mixed together and thereafter the mixture is subjected to biaxial orientation to produce an opaque film; and additionally, papers produced of pulp fibers such as high-quality papers, medium quality papers, roll papers, reclaimed papers and coated papers. For the purpose of attaining satisfactory image uniformity, it is preferable that the supports made of pulp fibers are provided with a coating layer in advance and then coated with a heat-sensitive layer.

As a form of multi-color thermal recording material, there can be cited a multi-color thermal recording material in which two thermal recording layers having different color forming temperatures and forming colors in different tones are laminated to be formed on one side of the support wherein the upper thermal recording layer contains a developing/reducing reagent or a reversible developer and the lower thermal recording layer contains the developer of the present invention. In this material, the developing/reducing reagent used in the upper thermal recording layer exhibits developing function when heated at low temperatures and exhibits decoloring function when heated at high temperatures, and is an amphoteric compound containing an acidic group having a role of developing function and a basic group having a

role of decoloring function. The acidic group is represented by a phenolic hydroxyl group or a carboxyl group, while the basic group is represented by an amino group. Such a developing/reducing reagent may contain the basic group as a functional group, but preferably contains the basic group as a portion of a salt compound such as a complex between a phenolic carboxylic acid compound and an amine compound. Specific examples of such a developing/reducing reagent may include the following compounds. Examples of the phenolic carboxylic acid compound constituting the developing/reducing reagent may include 2-hydroxybenzoic acid, 3-hydroxybenzoic acid, 4-hydroxybenzoic acid, 3,4-dihydroxybenzoic acid, 3,5-dihydroxybenzoic acid, 2,3-dihydroxybenzoic acid, 2,4-dihydroxybenzoic acid, 2,5-dihydroxybenzoic acid, 2,6-dihydroxybenzoic acid, gallic acid, bis(4-hydroxyphenyl)acetic acid and 3,3-bis(4-hydroxyphenyl)propionic acid. Examples of the amine compound forming the salt or the complex with the phenolic carboxylic acid compound may include octylamine, nonylamine, decylamine, laurylamine, tetradecylamine, heptadecylamine, stearylamine, behenylamine, 3-methoxypropylamine and hexamethylenediamine.

The reversible developer is, for example, a phenolic compound or a phosphonic acid compound which has a aliphatic hydrocarbon group having 8 or more carbon atoms. Specific examples of such a reversible developer may include the following compounds; however, the reversible developer is not limited to these examples, and no constraint is imposed on the reversible developer as long as it is a reagent that exhibits developing function when heated at low temperatures and exhibits decoloring function when heated at high temperatures. The above described specific examples may include 4-(octadecylthio)phenol, 4-(docosylthio)phenol, 4-(octadecyloxy)phenol, 4-(docosyloxy)phenol, N-octadecyl-4-hydroxybenzamide, 4'-hydroxydocosanoic acid anilide, N-(4-hydroxyphenyl)-N'-n-octadecyl urea and docosylphosphonic acid. When recording is made by use of a multi-color thermal recording material with a thermal printer or the like, only the low-temperature color forming layer undergoes color formation with low-temperature heat printing, while with high-temperature heat printing only the high-temperature color forming layer undergoes color formation and the low-temperature color forming layer in the printed portion is decolored.

The use of another developer having an extremely high image stability of recorded images in combination with the developer of the present invention can produce an article for use in laser marking which provides color-formed recorded images which are sufficient in color forming density and remarkably stable; accordingly, this is particularly advantageous from the viewpoint of long-term preservation of recordings. The article for use in laser marking preferably contains a recording-sensitivity improver in the thermal recording layer thereof. As the usable recording-sensitivity improver, there are used substances capable of absorbing the laser light used for irradiation. Specific examples of such substances may include various inorganic compounds such as aluminum hydroxide, and silicate minerals including wollastonite, bentonite, micas (white mica, bronze mica), calcium silicate, talc, kaolin, clay, fayalite, hornblend and albite. Particularly preferable are aluminum hydroxide, white mica, wollastonite and kaolin. The inorganic compounds may be used each alone or as admixtures of two or more thereof.

The ratio between the used amounts of the dye precursor and the recording-sensitivity improver in the thermal recording layer can be appropriately selected according to the types of the used dye precursor and the used recording-sensitivity improver, no particular constraint being imposed on the ratios. In general, however, the recording-sensitivity improver can be used within a range from 10 to 5000 parts by weight, and preferably from 100 to 2000 parts by weight, in relation to 100 parts by weight of the color forming material. The proportions of the dye precursor, the developer and the recording-sensitivity improver in the thermal recording layer in relation to the total amount of the solid content in the layer concerned can be set to fall within following ranges, respectively: for the dye precursor, 5 to 30 wt%, and preferably 10 to 25 wt%; for the developer, 10 to 60 wt%, and preferably 20 to 50 wt%; and for the recording-sensitivity improver, 5 to 40 wt%, and preferably 10 to 30 wt%. For the purpose of further improving the sensitivity of the article for use in laser making, the above described sensitizers can also be contained in the thermal recording layer.

A color forming marking composition contains as indispensable components thereof the above described colorless or light-colored dye precursor, developer, and recording-sensitivity improver, and an aqueous binder and water; according to need, various aids are mixed to yield the composition concerned. Examples of the aids used in this case may include: dispersants such as sodium dioctylsulfosuccinate, sodium dodecylbenzenesulfonate, sodium salt of laurylalcohol sulfate and metal salts of fatty acids; masking agents such as titanium oxide; defoaming agents; viscosity adjusters; fluorescent dyes; and colorants. No particular constraint is imposed on the substrate onto which the color forming marking composition is printed (applied), as long as the substrate needs marking. Examples of such a substrate may include specified portions of food containers, wrapping materials and electronic parts, and articles such as label substrates to be bonded to these aforementioned matters. As the label substrates, there are appropriately used papers and others such as papers and synthetic papers, synthetic resin films, plastics, metal-deposited papers and synthetic papers, metal deposited films, metals and wood materials according to need. A color forming marking composition may be prepared as follows: a binder is dissolved or dispersed in water or a solvent containing water as the main component; a color forming material, a developer, a recording-sensitivity improver and the like are, if necessary, dissolved or dispersed in water or a solvent containing water as the main component with a dispersing device such as a ball mill, an attritor, a sand grinder or the like, in such a way that the individual components are treated together or separately, for example, in water or a water-containing solvent which contains a dispersant such as polyvinyl alcohol, and thus a dispersion liquid

or dispersion liquids are prepared; the mean particle size of each of the components after being subjected to the dispersion treatment is usually about 2 μ or less and preferably about 1 μ or less; then a binder and the dispersion liquid(s) are mixed together to yield a color forming marking composition. The solid content of the color forming marking composition is 20 to 70 wt%, and preferably of the order of 30 to 65 wt%.

The color forming marking composition may be directly applied onto the substrate, or onto the substrate beforehand having been subjected to surface treatment or primer coating. The application can be made with an appropriate coating device such as a roll coater, a gravure coater, a micro gravure coater, a knife coater or a spray coater. The film thickness of the coating film (thermal recording layer) obtained after coating and drying can be made generally to be 1 to 4 μm. When the thickness is less than 1 μm, the color forming properties for laser irradiation come to be poor and at the same time the coating film tends to be exfoliated, while when the thickness is thicker than 4 μm, the drying properties and the adaptability for label adhesion tends to be degraded. The drying is varied depending on the coating conditions including the line speed, and may be carried out at room temperature, but also may be carried out under heating under the conditions such that the thermal recording layer does not undergo color formation. The protective layer in an article for use in laser marking is arranged by applying a transparent clear coating liquid onto the thermal recording layer thereof. Such a clear coating liquid is an aqueous composition composed of an aqueous binder, water and others.

By irradiating laser light onto the thus formed thermal recording layer of the article for use in marking, the irradiated portion thereof is heated, and consequently the developer and the dye precursor are reacted with each other to lead to color formation, namely, marking. No particular constraint is imposed on the amount of the irradiated laser energy, but it is preferably 1.4 J(joules)/$cm^2$ or less from the viewpoint of the possible breakdown of the coating film. On the other hand, the lower limit for color formation is not clear because no device for generating low energy is available, but it has been found that an energy of 0.4 J/$cm^2$ is enough for a sufficient color formation. Consequently, the irradiation energy range for color formation is set within a range from 0.4 to 1.4 J/$cm^2$, and particularly appropriately from 0.45 to 1.2 J/$cm^2$. As the laser to be used in the irradiation, a pulse laser or a scanning laser is suitable, and as the types of the lasers, any of a gas laser, an excimer laser and a semiconductor laser is applicable. Specifically, a carbon dioxide gas laser, a mixed gas laser, a YAG laser, a ruby laser and the like can be cited.

Labels as articles for use in laser marking can be produced as follows: papers and others such as papers and synthetic papers, synthetic resin films, plastics, metal deposited papers and synthetic papers, metal deposited films, metals and the like are appropriately used as label substrates according to need; and on the basis of the above described methods, a thermal recording layer and a protective layer are formed on each of the label substrates selected. The application of the labels to be obtained encompasses all the fields in which labels have hitherto been used, particularly preferable application fields being related to food, medicinal products, toiletries, publications, and electronic and electric parts. The wrapping materials as the articles for use in laser marking are articles prepared by providing thermal recording layers and protective layers, by means of the above described method, to various, usually used wrapping materials such as boxes, wrapping papers, packages and the like in which appropriately used as substrates are papers and others such as papers and synthetic papers, synthetic resin films, plastics, metal deposited papers and synthetic papers, metal deposited films, metals, glass and wood materials. The application of these wrapping materials encompasses all the fields in which wrapping materials have hitherto been used, particularly preferable application fields being related to food, medical products, toiletries, publications, and electronic and electric parts. Containers as the article for use in laser marking of the present invention use as substrates glass, plastic and metals, and are produced by providing a thermal recording layer and a protective layer onto each of these substrates by means of the above described method. These containers are applicable to all the fields in which containers have hitherto been used, such as the fields related to food containers including bottles for alcoholic and refreshing beverages, retort food containers and instant food containers; cosmetic containers; medicinal product containers; and toiletry products.

Now, the present invention will be specifically described on the basis of examples, comparative examples and a reference example. However, the embodiments of the present invention are not limited to these examples. In the following descriptions, "parts" means "parts by weight" and "%" means "wt%."

First, description will be made on the methods for analyzing and evaluating the performances of each of the substances to be dealt with in the examples, comparative examples and reference example.

<Measurements of the Contents and Composition Ratios of Triphenolic Compounds in Developers>

Measurements were made with a high performance liquid chromatography (manufactured by Hitachi High-Technologies Corp.: L-7100) under the following conditions.

Column: Cadenza CD-C18 (manufactured by Intact Co., Ltd., ODS column)
Developing solvent (vol. ratio): Gradient treatment was carried out in the following mixed solvent.

$CH_3CN/H_2O$ (containing 0.15% ammonium acetate) = 3/7 to 7/3 (for 40 min), and subsequently, 7/3 to 9.6/0.4 (for

10 min)
Internal standard substance: Pyrene
Flow rate: 1 ml/min
Detector: UV 254 nm

<Melting Point Measurement>

Measurements were made with a melting point measurement apparatus (manufactured by Sibata Scientific Technology Ltd., B-545) at the temperature increase rate of 1°C/min, and the melting start temperatures as determined by visual inspection were taken as melting points.

<Color-Forming Test>

Prescribed thermal recording materials were subjected to color forming test by use of a thermal printing tester (TH-PMD) manufactured by Ohkura Electric Co., Ltd., equipped with a thermal head KJT-256-8MGF1 manufactured by Kyocera Corp. under the conditions that the applied voltage was 24 V, the pulse width was 1.5 msec, and the printing energy was 0.34 mj/dot. The color-formed portions of the recording materials were measured with a Macbeth reflection densitometer (manufactured by Kollmorgen Corp., RD917) to obtain color forming densities (OD values).

<Heat Resistance Test>

Color-forming density preservation rates were obtained from the color forming densities after and before allowing the color-formed thermal recording materials to stand in a hot air circulation dryer at 60°C for 24 hr, on the basis of the following formula.

Color-forming density preservation rate (%) = (color forming density after allowing to stand at 60°C for 24 hr/color forming density before allowing to stand) × 100

<Moisture Resistance Test>

Color-forming density preservation rates were obtained from the color forming densities after and before allowing the color-formed thermal recording materials to stand in a constant temperature and constant humidity chamber at 40°C and at a humidity of 90% RH for 24 hr, on the basis of the following formula.

Color-forming density preservation rate (%) = (color forming density after allowing to stand at 40°C and 90% RH for 24 hr/color forming density before allowing to stand) × 100

On the basis of the results of the above described tests and measurements, the evaluations of the performances of the recording materials were carried out by means of the following methods.

[Evaluation of Sensitivity]

From the color forming densities (OD values) obtained in the above described color forming tests, sensitivities were evaluated on the basis of the following standards; the higher are the values, the better are the sensitivities.

○: OD value: larger than 1.05
Δ: OD value: 0.90 to 1.05
×: OD value: less than 0.90

[Evaluation of Fog in Non-image Areas]

From the OD values of the non-color forming portions of the thermal recording materials subjected to measurements in the above described color forming test, fog in non-image areas degrees were evaluated on the basis of the following standards. The lower are the values, the better are the fog in non-image areas degrees. Additionally, the thermal recording materials subjected to the above described heat resistance test and moisture resistance test were also subjected to the fog in non-image areas evaluation in the same manner.

○: OD value: less than 0.10
Δ: OD value: 0.10 to 0.16
×: OD value: larger than 0.16

[Evaluation of Heat Resistance]

From the color forming density preservation rates obtained in the above described heat resistance test, the heat resistance as the index of the image stability of the recorded image was evaluated for each of the images on the basis of the following standards. The higher are the values, the better are the heat resistances.

○: Larger than 80%
Δ: 80% to 50%
×: Less than 50%

[Evaluation of Moisture Resistance]

From the color forming density preservation rates obtained in the above described moisture resistance test, the moisture resistance as the index of the image stability of the recorded image was evaluated for each of the images on the basis of the following standards. The higher are the values, the better are the heat resistances.

○: Larger than 70%
Δ: 70% to 50%
×: Less than 50%

Example 1

In a flask, 20 g of toluene and 48.0 g (510 mmol) of phenol as a phenolic compound were placed, and 5.0 g (25.6 mmol) of 2,6-dihydroxymethyl-4-isopropylphenol as a p-substituted phenol derivative was additionally placed in the flask, and the mixture thus obtained was stirred for dissolution. To this solution, 0.12(0.63 mmol) of p-toluenesulfonic acid monohydrate was added at 30°C under stirring, then the solution was stirred as it was for 5 minutes, and thereafter allowed to react at 60°C for 2 hours. The obtained reaction solution was washed with water, made to have a pH of 6, and then the toluene as the solvent and the excessively used phenol were removed under reduced pressure to yield a condensation product as the developer of the present invention. In the obtained developer, the content of the triphenolic compound (A) was 90%, the content of the remaining phenol was 0.4%, the balance was composed of other condensation by-products, the content of the triphenolic compound (C) was 16%, and the melting point was 130°C.

Next, 2 g of the obtained developer was pulverized for 12 hours to be dispersed, together with a 2.5% aqueous polyvinyl alcohol (manufactured by Nippon Synthetic Chemical Industry Co., Ltd.; trade name: "Gohseran L-3266") solution, by use of a paint shaker, and thus a dispersion liquid was obtained. Additionally, 70 g of 3-dibutylamino-6-methyl-7-anilinofluoran as a leuco dye was pulverized to be dispersed, together with 130 g of a 8% aqueous polyvinyl alcohol solution, by use of a sand grinder (the vessel volume: 400 ml; manufactured by Aimex Co., Ltd.) at a rotation speed of 2000 rpm for 3 hours, and thus a dispersion liquid was obtained. In addition, 70 g of β-naphthyl benzyl ether (manufactured by Ueno Fine Chemicals Industry, Ltd.; trade name: "BON") as a sensitizer was pulverized to be dispersed, together with 130 g of a 5.4% aqueous polyvinyl alcohol solution, by use of a sand grinder (the vessel volume: 400 ml; manufactured by Aimex Co., Ltd.) at a rotation speed of 2000 rpm for 3 hours, and thus a dispersion liquid was obtained. In addition, 10 g of calcium carbonate was mixed with 30 g of water, and the mixture was stirred to be dispersed with a stirrer to yield a dispersion liquid.

Next, a coating liquid containing the color forming material composition of the present invention was obtained by mixing together the following ingredients under stirring wherein "parts" are given in terms of dried solid content: 30 parts of the developer dispersion liquid; 15 parts of the 3-dibutylamino-6-methyl-7-anilinofluoran dispersion liquid; 30 parts of the β-naphthyl benzyl ether dispersion liquid; 20 parts of the calcium carbonate dispersion liquid; 10 parts of a 16% (solid content concentration) zinc stearate dispersion liquid; and 7 parts of a 15% polyvinyl alcohol.

The coating liquid thus obtained was applied onto a base paper of 50 $g/m^2$ in basis weight with a bar coater (rod No. 10). After drying, the coated paper was treated with a super calendar to yield a thermal recording material. The

application amount of the coating liquid was 3g/$m^2$ in terms of dry weight. The results of the performance evaluation on the obtained thermal recording material are shown in Table 1.

Example 2

A condensation product as the developer of the present invention was obtained according to the procedures of Example 1 except that 5.4 g (25.6 mmol) of 2,6-dihydroxymethyl-4-sec-butylphenol was used in place of 5.0 g (25.6 mmol) of 2,6-dihydroxymethyl-4-isopropylphenol. In the obtained developer, the content of the triphenolic compound (A) was 89%, the content of the remaining phenol was 0.2%, the balance was composed of other condensation by-products, the content of the triphenolic compound (C) was 19%, and the melting point was 120°C.

By use of the obtained developer and according to the procedures in Example 1, a coating liquid containing a color forming material composition was prepared and the performance evaluation tests of the recording material were carried out. The results thus obtained are shown in Table 1.

Example 3

In a flask, 48.0 g (510 mmol) of phenol was placed, and additionally 5.0 g (25.6 mmol) of 2,6-dihydroxymethyl-4-t-butylphenol was placed in the flask, and the mixture thus obtained was stirred for dissolution. To this solution, 0.074 g (0.73 mmol) of a 36% hydrochloric acid was added at 30°C under stirring, then the solution was stirred as it was for 5 minutes, and thereafter allowed to react at 60°C for 2 hours. The obtained reaction solution was washed with water, made to have a pH of 6, and then the excessively used phenol was removed under reduced pressure to yield a condensation product as the developer of the present invention. In the obtained developer, the content of the triphenolic compound (A) was 86%, the content of the remaining phenol was 0.6%, the balance was composed of other condensation by-products, the content of the triphenolic compound (C) was 12%, and the melting point was 126°C. Additionally, toluene was added to this developer, and the mixture thus obtained was stirred under heating, cooled, and filtered to yield a purified developer in which the triphenolic compound (A) was 97% and the content of the triphenolic compound (C) was 12%. The melting point of the purified developer was 132°C.

By use of the obtained developer and according to the procedures in Example 1, a coating liquid containing a color forming material composition was prepared and the performance evaluation tests of the recording material were carried out. The results thus obtained are shown in Table 1.

Example 4

The developer obtained in Example 2 was dissolved in toluene by heating, and then cooled for recrystallization, to yield a recrystallized developer in which the content of the triphenolic compound (B) having OH groups at both of the 4- and 4'-positions respectively in the left and right aromatic rings was 92%. The melting point of the recrystallized developer was 200°C. A new developer was prepared by fully mixing a mixture composed of 1.6 g of the recrystallized developer and 0.4 g of 4-hydroxy-4'-isopropoxydiphenylsulfone added as another developer. By use of the new developer and according to the procedures in Example 1, a coating liquid containing a color forming material composition was prepared and the performance evaluation tests of the recording material were carried out. The results thus obtained are shown in Table 1.

Example 5

A new developer was prepared by fully mixing a mixture composed of 1.6 g of Bis P-PC (manufactured by Honshu Chemical Industry Co., Ltd.; purity: 98%; melting point: 210°C), which is the triphenolic compound (B) having OH groups at both of the 4- and 4'-positions respectively in the left and right aromatic rings and obtained by condensation between 2,6-dihydroxymethyl-4-methylphenol and phenol, and 0.4 g of 4,4'-dihydroxydiphenylsulfone added as another developer. By use of the new developer and according to the procedures in Example 1, a coating liquid containing a color forming material composition was prepared and the performance evaluation tests of the recording material were carried out. The results thus obtained are shown in Table 1.

Example 6

As the developer of the present invention, a condensation product between 2,6-dihydroxymethyl-4-isopropylphenol and phenol was obtained according to the procedures in Example 1 except that the used amount of phenol was set at 7.3 g (78 mmol). In the obtained developer, the content of the triphenolic compound (A) was 55%, the content of other condensation by-products was 44% and the content of the triphenolic compound (C) was 11%. According to the

results of the melting point measurement, a certain extent of melting was observed in the developer from a vicinity of 50°C, and then the melting gradually proceeded without allowing observation of any definite melting point. By use of the obtained developer and according to the procedures in Example 1, a coating liquid containing a color forming material composition was prepared and the performance evaluation tests of the recording material were carried out. The results thus obtained are shown in Table 1.

<Comparative Example 1>

By using, as a developer, MtrisPC (manufactured by Honshu Chemical Industry Co., Ltd.; purity: 96%; melting point: 215°C) being a triphenolic compound, namely, the triphenolic compound (C) in which all the p-cresol rings were bonded through the methylene groups at the ortho positions of the OH groups thereof, and according to the procedures in Example 1, a coating liquid containing a color forming material composition was prepared and the performance evaluation tests of the recording material were carried out. The results thus obtained are shown in Table 1.

<Comparative Example 2>

A condensation product mainly containing the triphenolic compound (C) was obtained according to the procedures in Example 1 except that 2,6-dihydroxymethyl-4-ethylphenol was used in place of 2,6-dihydroxymethyl-4-isopropylphenol and p-cresol was used in place of phenol. The obtained condensation product was recrystallized with methyl isobutyl ketone, and then the content of the triphenolic compound (C) was found to be 98% and the melting point was found to be 203°C. 1.4 g of the MTrisPC used in Comparative Example 1 as another developer and 0.6 g of the above described condensation product after recrystallization were fully mashed to be mixed together in a mortar to yield a yet another developer. By use of the developer thus obtained and according to the procedures in Example 1, a coating liquid containing a color forming material composition was prepared and the performance evaluation tests of the recording material were carried out. The results thus obtained are shown in Table 1.

<Comparative Example 3>

A condensation product mainly containing the triphenolic compound (C) in which all the groups adjacent to the OH groups substituted in the left and right aromatic rings were methyl groups was obtained according to the procedures in Example 1 except that 2,6-dihydroxymethyl-4-methylphenol was used in place of 2,6-dihydroxymethyl-4-isopropylphenol and 2,6-xylenol was used in place of phenol. In the condensation product, the content of the triphenolic compound (C) was 95%, and the melting point was 183°C. By use of the condensation product as a developer and according to the procedures in Example 1, a coating liquid containing a color forming material composition was prepared and the performance evaluation tests of the recording material were carried out. The results thus obtained are shown in Table 1.

<Comparative Example 4>

A condensation product was obtained according to the procedures in Example 1 except that the used amount of phenol was set at 2.4 g (25.6 mmol). In the obtained condensation product, the content of the triphenolic compound (A) was 15%, the content of other condensation by-products was 84%, and the content of the triphenolic compound (C) was 3%. According to the results of the melting point measurement, a certain extent of melting was observed from a vicinity of 40°C, and then the melting gradually proceeded without allowing observation of any definite melting point. By using the condensation product as a developer and according to the procedures in Example 1, a coating liquid containing a color forming material composition was prepared and the performance evaluation tests of the recording material were carried out. The results thus obtained are shown in Table 1.

<Reference Example 1>

For reference, by using as a developer BPA which has hitherto been widely used and according to the procedures in Example 1, a coating liquid containing a color forming material composition was prepared and the performance evaluation tests of the recording material were carried out. The results thus obtained are shown in Table 1.

The results shown in Table 1 show that the thermal recording materials obtained by use of the developers of the present invention have performances comparable with those obtained by using BPA with respect to the sensitivity, the fog in non-image areas and the image stability (heat resistance) of recorded images, and additionally have performances better than those obtained by using BPA with respect to the image stability of recorded images (moisture resistance). On the contrary, it can be seen that the thermal recording materials obtained by use of the developers of Comparative Examples show comparable performances with those obtained by using BPA with respect to the fog in non-image

areas, but show performances worse than those obtained by using BPA with respect to the sensitivity and the image stability of recorded images.

[Table 1]

| | Sensitivity | Fog in non-image areas | | | Image stability of recorded images | |
|---|---|---|---|---|---|---|
| | (0.34mj/dot) | Before test | After heat resistance test | After moisture resistance test | Heat resistance | Moisture resistance |
| Example 1 | ○ | ○ | ○ | ○ | ○ | ○ |
| Example 2 | ○ | ○ | ○ | ○ | ○ | ○ |
| Example 3 | ○ | ○ | ○ | ○ | ○ | ○ |
| Example 4 | ○ | ○ | ○ | ○ | ○ | ○ |
| Example 5 | △ | ○ | ○ | △ | ○ | ○ |
| Example 6 | △ | ○ | △ | △ | ○ | ○ |
| Comparative Example 1 | △ | ○ | ○ | ○ | × | × |
| Comparative Example 2 | △ | ○ | ○ | ○ | △ | × |
| Comparative Example 3 | × | ○ | ○ | ○ | × | × |
| Comparative Example 4 | △ | △ | × | × | ○ | ○ |
| Reference Example 1 | ○ | ○ | ○ | ○ | ○ | × |

INDUSTRIAL APPLICABILITY

The developer of the present invention and the thermal recording materials using the developer provide thermal recording materials capable of replacing BPA inexpensively, and are thereby highly valuable in industrial applications.

## Claims

1. A developer comprising a triphenolic compound (B) which is a species of triphenolic compound (A) represented by the following general formula (1):

[Formula 1]

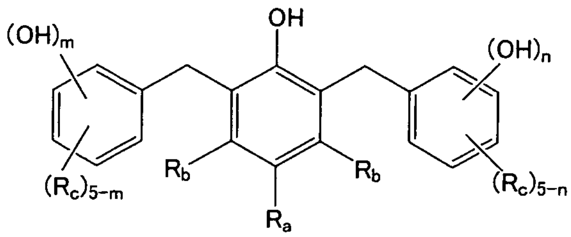

.... (1)

wherein $R_a$ is a group selected from the group consisting of an alkyl group having 1 to 18 carbon atoms, a cycloalkyl group having 5 to 10 carbon atoms, an alkoxy group having 1 to 4 carbon atoms, a halogen atom, and an aralkyl group and an aryl group each having 7 to 14 carbon atoms; $R_b$ is a group selected from the group consisting of a hydrogen atom, an alkyl group having 1 to 4 carbon atoms, an alkoxy group having 1 to 4 carbon atoms and a halogen atom, and $R_b$ groups may be the same or different; $R_c$ is a group selected from the group consisting of a hydrogen atom, a halogen atom, a cyano group, an alkyl group having 1 to 18 carbon atoms, a cycloalkyl group having 5 to 10 carbon atoms, an alkoxy group having 1 to 4 carbon atoms, and an aralkyl group and an aryl group each having 7 to 14 carbon atoms, and two or more $R_c$ groups, if any, may be the same or different; and m and n each represent an integer of 1 to 5,
wherein the triphenolic compound (B) has:

(a) an OH group at least at one of 4- and 4'-positions respectively in left and right aromatic rings; and
(b) a hydrogen atom as at least one of substituents adjacent to at least one of OH groups substituted in the left and right aromatic rings.

2. The developer according to claim 1, wherein a content of a triphenolic compound (C) which is the triphenolic compound (A) and does not correspond to the triphenolic compound (B) is 30 wt% or less.

3. The developer according to any one of claims 1 and 2, **characterized in that** a ratio of a content of the triphenolic compound (B) to a content of the triphenolic compound (A) is 0.5 or more.

4. The developer according to any one of claims 1 to 3, wherein a content of the triphenolic compound (A) is 20 wt% or more.

5. The developer according to any one of claims 1 to 4, which comprises a condensation product obtained by condensing at least one of
a p-substituted phenol derivative represented by the following general formula (2):

[Formula 2]

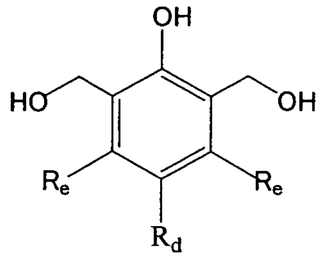

.... (2)

wherein $R_d$ is a group selected from the group consisting of an alkyl group having 1 to 18 carbon atoms, a cycloalkyl group having 5 to 10 carbon atoms, an alkoxy group having 1 to 4 carbon atoms, a halogen atom, and an aralkyl group and an aryl group each having 7 to 14 carbon atoms; and $R_e$ is a group selected from the group consisting of a hydrogen atom, an alkyl group having 1 to 4 carbon atoms, an alkoxy group having 1 to 4 carbon atoms and a halogen atom, and $R_e$ groups may be the same or different; and
a phenolic compound represented by the following general formula (3):

[Formula 3]

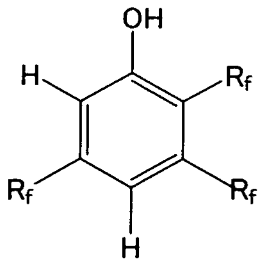

.... (3)

wherein $R_f$ is a group selected from the group consisting of a hydrogen atom, a hydroxyl group, a halogen atom, a cyano group, an alkyl group having 1 to 18 carbon atoms, a cycloalkyl group having 5 to 10 carbon atoms, an alkoxy group having 1 to 4 carbon atoms, and an aralkyl group and an aryl group each having 7 to 14 carbon atoms, and $R_f$ groups may be the same or different,
wherein a content of a condensation product component other than the triphenolic compound (A) contained in the condensation product is 50 wt% or less in relation to the total condensation product.

6. The developer according to any one of claims 1 to 5, **characterized in that** $R_c$ groups in the formula (1) are all a hydrogen atom.

7. The developer according to any one of claims 1 to 6, **characterized in that** $R_f$ groups in the formula (3) are all a hydrogen atom.

8. The developer according to any one of claims 1 to 7, comprising another developer capable of making a colorless or light-colored dye precursor form a color.

9. A color forming material composition for recording materials comprising a colorless or light-colored dye precursor and the developer according to any one of claims 1 to 8.

10. The color forming material composition for recording materials according to claim 9, further comprising a sensitizer.

11. A recording material formed by arranging on a support the color forming material composition for recording materials according to any one of claims 9 and 10.

**12.** The recording material according to claim 11, wherein the recording material is a thermal recording material.

## INTERNATIONAL SEARCH REPORT

International application No.
PCT/JP2004/008708

**A. CLASSIFICATION OF SUBJECT MATTER**
Int.Cl[7] B41M5/28, B41M5/30, B41M5/34, C09B57/00

According to International Patent Classification (IPC) or to both national classification and IPC

**B. FIELDS SEARCHED**

Minimum documentation searched (classification system followed by classification symbols)
Int.Cl[7] B41M5/28, B41M5/30, B41M5/34, C09B57/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
REGISTRY(STN), CAPLUS(STN)

**C. DOCUMENTS CONSIDERED TO BE RELEVANT**

| Category* | Citation of document, with indication, where appropriate, of the relevant passages | Relevant to claim No. |
|---|---|---|
| A | JP 9-278695 A (Honshu Chemical Industry Co., Ltd.), 28 October, 1997 (28.10.97), Full text (Family: none) | 1-12 |
| A | JP 2001-96926 A (Showa Highpolymer Co., Ltd.), 10 April, 2001 (10.04.01), Full text (Family: none) | 1-12 |
| A | JP 6-312947 A (Honshu Chemical Industry Co., Ltd.), 08 November, 1994 (08.11.94), Full text (Family: none) | 1-12 |

[X] Further documents are listed in the continuation of Box C.　　[ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 September, 2004 (01.09.04) | Date of mailing of the international search report<br>21 September, 2004 (21.09.04) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2004/008708

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-107577 A (Honshu Chemical Industry Co., Ltd.), 19 April, 1994 (19.04.94), Full text (Family: none) | 1-12 |
| A | JP 1-263074 A (Fuji Photo Film Co., Ltd.), 19 October, 1989 (19.10.89), Full text (Family: none) | 1-12 |
| A | JP 8-230328 A (Fuji Photo Film Co., Ltd.), 10 September, 1996 (10.09.96), Full text (Family: none) | 1-12 |

Form PCT/ISA/210 (continuation of second sheet) (January 2004)